# EUROPEAN PATENT SPECIFICATION

(11) **EP 2 337 768 B1**
(45) Date of publication and mention of the grant of the patent: **20.06.2012**
(21) Application number: 09776288.4
(22) Date of filing: 17.09.2009
(51) Int. Cl.: C02F 1/28, B01D 17/02, B01J 20/28, B01J 20/30

(54) **SORPTION ELEMENT, SORPTION MEDIUM AND METHOD FOR PROVIDING A SORPTION MEDIUM**
SORPTIONSELEMENT, SORPTIONSMEDIUM UND VERFAHREN ZUR BEREITSTELLUNG EINES SORPTIONSMEDIUMS
ÉLÉMENT DE SORPTION, MILIEU DE SORPTION ET PROCÉDÉ POUR PRODUIRE UN MILIEU DE SORPTION

(30) Priority: 17.09.2008 EP 08016357
(43) Date of publication of application: 29.06.2011
(73) Proprietor: C.C. Jensen A/S, 5700 Svendborg (DK)
(72) Inventor: JENSEN, Carl, Aage, DK-5700 Svendborg (DK); GRUM-SCHWENSEN, Sofus, Valdemar, DK-5700 Svendborg (DK)
(74) Representative: Jensen, Peter Kim
(86) International application number: PCT/DK2009/050242
(87) International publication number: WO 2010/031403

(56) References cited:
- GB-A- 2 258 166
- JP-A- 10 076 592
- US-A- 3 951 814
- US-A1- 2006 042 210
- US-A1- 2006 254 973

## Description

### Technical Field

The invention relates to a sorption element for removing hydrocarbon contaminants from an aqueous liquid, a sorption medium and a method for producing a sorption medium.

### Background

In many industrial and maritime applications, waste water is produced comprising considerable amounts of hydrocarbon contaminants, such as lubricants, fuel or oil residues. The waste water is typically cleaned using systems of different kinds, for example gravitational oily water separators. The water output from such systems often still contains contaminants at a concentration level not suitable for direct discharge of the water. This is of particular importance for maritime vessels, where oily bilge water is produced that has to be cleaned on board before it may be discharged into the sea in compliance with international environmental regulations, such as the MARPOL-agreement.

Waste water output from an oily water separator is therefore often treated further in filter devices comprising a filter element arranged in a filter housing with an input port and an output port. The waste water is fed to the filter device through the input port, guided through the filter element and discharged through the output port. The aqueous liquid to be cleaned is passed across a filter medium of the filter element. The filter medium holds back oily contaminants as the aqueous liquid passes through the filter medium. Filter elements often have a tendency to clog up long before the capacity for the up-take of contaminants by the filter medium is reached. As a consequence, the filter elements of such devices need to be replaced when the pressure drop across the filter element rises above a critical value long before the filter medium is actually used up. Furthermore, the change in pressure drop during the use of the filter often requires continual adjustments of the cleaning system adding to the systems complexity and/or requiring special attention from qualified staff.

From US 2006/0042210 A1 a contaminant removal filter for removing basic contaminants from a gas stream is known. The filter has a porous or fibrous body that includes a plurality of passages extending from a first, inlet face to a second, outlet face, the passages providing flow paths. The body of that filter, which is only intended for use in a high purity gaseous environment, is impregnated with water-soluble acidic material, such as citric acid, acting as the actual sorption medium. However, the filter according to US 2006/0042210 A1 is not suitable for use in an aqueous liquid, because the water-soluble acidic material from the filter will dissolve in the acqueous liquid, thereby adding detrimental contaminants to the acqueous liquid to be cleaned.

US 2006/0254973 A1 discloses a filter for liquid filtration, wherein the construction of the filter is intended to ensure increased filtration capacity. To that purpose, the filter provides by-pass flow paths for operating layers of a rolled-up filter web in parallel. Even though the effect of clogging of the filter is reduced by this construction, the filter still relies on a flow pattern, where the liquid at some point on the way through the filter is forced to flow through the filter material transversely to the layers of the rolled-up filter web. As a consequence, a substantial change in pressure drop over the filter may be observed, particularly towards the end of the lifetime of the filter.

Therefore, there is a need for an improved element for use in systems for removing hydrocarbon contaminants from an aqueous liquid such as bilge water in a maritime vessel or waste water from industrial machinery.

### Disclosure of the Invention

The object of the invention is to provide an element for removing hydrocarbon contaminants from an aqueous liquid, which overcomes the disadvantages of the filter elements mentioned above.

This is achieved by a sorption element according to the invention, wherein the sorption element comprises a frame structure with at least one opening providing a fluid connection between an input side and an output side of the sorption element, each opening being filled with a sorption medium comprising stacked sheets of a sorbent material, the sheets being bonded together by a plurality of interspaced line-shaped joints and/or punctiform joints, wherein the sheets of the sorbent material are arranged to extend in the direction from the input side to the output side, thereby forming a plurality of channels, each channel being defined by sorbent material and having a feed opening towards the input side and a discharge opening towards the output side.

The sorption element is intended to be used in a sorption device comprising a housing with an inlet port, an internal cavity and an output port. The sorption element is arranged inside the cavity of the housing in sealing engagement with the walls of the housing so as to force a fluid flowing from the input port to the output port to pass through the sorption element, wherein the input side of the sorption element is connected to the input port via an input volume, and the output side of the sorption element is connected to the output port via an output volume.

During operation, the liquid flows from the inlet port into the cavity of the housing, filling the input volume that feeds the sorption element. Due to a pressure difference between the input side and the output side, the liquid is driven through the sorption element capturing contaminants in the sorption medium.

The layers of the sorbent sheet material are arranged in the opening of the supporting frame structure, wherein the layers are oriented substantially parallel to the direction of the intended flow.

The channels provide a substantially continuous flow path for a liquid to pass from the input side to the output side, and guide the flow of the liquid along the surface of the sorbent sheet material lining the channels, thereby exposing the liquid to a large surface area of sorbent material. The aqueous liquid is thus treated with the solid sorbent material taking up hydrocarbon contaminants, thereby cleaning the liquid as it passes through the channels of the sorption medium.

It should be noted, that the layers of the sorbent sheet material are tightly packed into the at least one opening of the frame so as to provide as much interaction surface per unit volume as possible and force the fluid flow to pass close to/along the surface of the sorbent sheet material, yet providing an easy passage for the fluid.

Oily contaminants present in the fluid may be captured by adhering to the surface of the sorbent material and/or by coalescing with particles/droplets already captured on the surface of the sorbent sheet material. One important advantage of passing the fluid to be cleaned along the surface of the sorbent sheet material is that the probability of capture by coalescence is strongly enhanced as compared to capture mechanisms relying on passing the fluid across a sheet material, such as in a filter.

The contaminants are retained in the sorption element, while the cleaned liquid is discharged through the discharge openings on the output side. The term "cleaned" refers to a reduction in contaminant concentration of the liquid discharged from the sorption element as compared to the liquid fed to the sorption element.

As mentioned above, the channels formed by the sorbent sheet material of the sorption element are open on both ends and provide a substantially continuous path for the liquid flowing through the sorption element. This has the advantage that the flow resistance of the sorption element according to the invention is substantially less than for known filter type separators relying on liquid flow through the filter and/or sorbent material rather than liquid flow along the surface of the sorbent sheet material.

Furthermore, as explained further below, clogging is avoided, while the probability of the capture of contaminants is increased. The lifetime of the sorption element is thus determined by the capacity of the sorbent material for retaining contaminants rather than by clogging of the sorption element before the sorbent material is used up.

It should also be noted that the change in pressure drop during the lifetime of a sorption element is negligible as compared to the increase of the pressure drop known from the operation of filter type elements. This allows for a less complex and less costly design and dimensioning of a cleaning/purification system using a sorption element according to the invention.

In one embodiment of a sorption element according to the invention, the frame structure has the shape of a hollow cylinder, preferably a right circular hollow cylinder, the cylinder having a first end, a second end opposite the first end, at least one outer face and at least one inner face, the outer and inner faces extending from the first end to the second end.

In the present application, the term cylinder is to be understood as comprising an arbitrary cylinder formed by two essentially identical basal planes having an arbitrary closed contour, wherein the basal planes are arranged substantially parallel to each other and wherein the contours are connected by parallel lines (generatrices) generating the peripheral surface of the cylinder. Furthermore, in agreement with common mathematical terminology, the term right cylinder is to be understood as a cylinder where the generatrices are substantially perpendicular to the basal planes, the basal planes forming top and bottom faces of the cylinder. Accordingly, a right circular cylinder is a right cylinder with basal planes having a circular contour.

The term hollow cylinder is to be understood as a cylinder with an outer cylinder surface, i.e. the outer face of the hollow cylinder, defined by generatrices connecting the outer contours of the basal planes, wherein the outer cylinder surface encloses an inner volume defined by an inner surface, i.e. the inner face of the hollow cylinder. The inner volume of the hollow cylinder is connected to the outside of the hollow cylinder at least through one opening in the outer envelope of the cylinder, typically an opening in one of the basal planes.

As mentioned above, the sorption element is intended to fit inside the housing of a sorption device. The housing may have a cylindrical cavity and may be provided with a first port that, via a first buffer volume, is connected to the outer face of the hollow cylinder-shaped sorption element. The housing may further be provided with a second port that, via a second buffer volume, is connected to the inner face of the hollow cylinder-shaped sorption element. The first and second buffer volumes act as manifolds for distributing the fluid flow over the outer and inner faces of the hollow cylinder-shaped sorption element, respectively.

Further according to another embodiment of a sorption element according to the invention, the outer face of the hollow cylinder faces towards the input side and the inner face of the hollow cylinder faces towards the output side, the channels extending from the outer face to the inner face.

Preferably in this embodiment, the sheets are arranged to extend from the outer face to/towards the inner face in a substantially radial direction, thereby defining channels extending in a substantially radial direction.

In practice, usually the first port of the above-mentioned sorption device housing is used as the input port and the second port is used as the output port. When operating the sorption device in such a housing, the direction of the fluid flow through the above-mentioned hollow cylinder-shaped sorption element is from the outer face towards the inner face. Thereby providing a larger interaction surface in the upstream part of the fluid flow close to the outer face of the sorption medium, where the contaminant concentration level is higher as compared to the downstream part of the fluid flow close to the inner face of the sorption medium.

Further according to another embodiment of a sorption element according to the invention, the frame structure comprises ring-shaped members in a plane substantially perpendicular to the cylinder axis, the ring-shaped members being supported at a distance from each other by rib-members, thereby defining the openings of the frame structure.

The ring-shaped members may define the shape of the basal plane of the cylindrical sorption element, while the rib-members provide a strengthening of the frame structure and thereby of the sorption element in a direction parallel to the principal axis of the cylinder. This is of particular importance when mounting the sorption element in a cylindrical housing using means for clamping the sorption element in a direction perpendicular to the base plates of the sorption element.

Further according to another embodiment of a sorption element according to the invention, the frame structure is made of a combustible material, such as wood, ply wood, fibre, or fibreboard.

In principle, the frame structure may be made of metal, plastic, or any other material resisting the hydrocarbon-contaminated aqueous liquid. However, advantageously the frame structure may be made of a combustible material that allows for easy disposal of the used sorption element without substantial remainders by burning the sorption element, e.g. in an incinerator of the type available on many maritime vessels. Wood, ply wood, fibre, or fibreboard are examples of frame materials that allow for burning the sorption element after use with low environmental impact.

Further according to another embodiment of a sorption element according to the invention, the sorbent sheet material is an oleophilic and/or hydrophobic material, such as a polypropylene fabric or a polyethylene fabric, thereby allowing for selectively adsorbing/absorbing hydrocarbons rather than water.

Further according to another embodiment of a sorption element according to the invention, a plurality of sorption media is arranged in series, the discharge openings of the channels of a first sorption medium being arranged opposite the feed openings of the channels of a subsequent sorption medium so as to feed liquid discharged from the first sorption medium to the subsequent sorption medium.

The advantage of a series arrangement of sorption media is that the purification/cleaning process may be broken up into several subsequent steps. Between subsequent sorption media, a buffer volume may be provided for redistribution of the fluid discharged from a first step before the fluid is fed to the sorption medium of the subsequent step.

Furthermore, the sorption media may be provided in modules allowing for easy adaption of the size of the sorption element. ,

It should also be noted that a plurality of sorption elements may also be combined in parallel so as to fill a larger housing.

Further according to another embodiment of a sorption element according to the invention, the subsequent sorption medium is arranged inside the first sorption medium, the outer face of the subsequent sorption medium being located opposite the inner face of the first sorption medium.

Concentric modules may be dimensioned to correspond to different standardised sizes of cylindrical housings, thereby allowing for an easy adaption of the sorption element to the required size / diameter.

According to a further aspect of the invention, a sorption element according to any of the abovementioned embodiments of a sorption element may be used for removing hydrocarbon contaminants from an aqueous liquid. In particular, a sorption element according to the invention may be used in a system for cleaning bilge water on a maritime vessel. Thereby, the advantages as described above with respect to the sorption element itself are also achieved for the use of the sorption element.

A system for cleaning bilge water inside the hull of a ship or other maritime vessels may comprise a sorption element according to the invention, the sorption element being arranged in sealing engagement inside a housing having an input port and an output port, so as to provide a fluid connection from the input port of the housing to the output port of the housing only through the sorption medium, and an oily water separator comprising a clean water output port, wherein the clean water output port is connected to the input port of the housing. In such a bilge water system, the clean water output port of the oily water separator may be connected to the input port of the housing via at least one pump, e.g. a centrifugal pump, for transferring liquid from the oily water separator to the housing. A re-circulation line comprising a valve may be provided, the recirculation line connecting the discharge side of the pump to the suction side of the pump.

Passing the aqueous liquid to be cleaned through a mechanical pump has the positive side effect of blending the contaminants and the water, thereby achieving a reduced particulate size of the contaminants in the water. The recirculation line may enhance the blending effect and may smoothen out sudden changes and/or transients in the contaminant concentration.

In a further aspect of the invention, a sorption medium for removing hydrocarbon contaminants from an aqueous liquid is provided, wherein the sorption medium comprises sheets of a sorbent sheet material, the sheets being arranged in juxtaposition to each other so as to form a stack of layers, opposite edges of the stacked sheets defining a first end face of the stack and a second end face of the stack opposite the first end face, wherein adjacent layers are bonded together by a plurality of interspaced line-shaped joints and/or punctiform joints, thereby providing a plurality of channels, each channel being defined by the sorbent sheet material and extending from a feed opening at the first end face to a discharge opening at the second end face.

An aqueous medium to be cleaned may be fed to the sorption medium through the feed openings provided at the first end face, and passed through the channels defined by the sheets of sorbent material, where the contaminants may be captured mainly by the above-mentioned capture mechanisms and retained in the sorption medium. After treatment in the channels of the sorption medium, the cleaned aqueous liquid is finally discharged through the discharge openings at the second end face.

The sheets of the sorption medium guide the flow along the surface of the sorbent material. By bonding adjacent sheets together, it is achieved that the distance between adjacent sheets defining a channel is limited and the fluid flow is kept close to and substantially parallel to the surface of the sorbent sheet medium. Thereby, the probability of capturing contaminants by adherence to the surface of the sheets and/or by coalescence with contaminant particulates/droplets already captured by the surface of the sheets is strongly increased as compared to other flow patterns.

Various bonding patterns of line-shaped joints, punctiform joints or combinations thereof may be contemplated. For example, substantially continuous bonding lines may be provided to form a structure of separate, substantially parallel channels. Alternatively, adjacent sheets may be attached to each other by punctiform joints, thereby forming, between adjacent sheets, a network of open channels confining the fluid flow in directions perpendicular to the sheets while allowing the fluid flow to pass essentially freely in directions parallel to the plane of the sheets.

As mentioned above, the open channels formed by the sorbent sheet material of the sorption element provide a substantially continuous path for the liquid flowing through the sorption element. This has the advantage that the flow resistance of the sorption element according to the invention is substantially less than for known separators of the filter type relying on liquid flow through a filter membrane or other filter material rather than along the surface of the sheet material.

Furthermore, clogging is avoided, since contaminants retained in the sorbent material do not obstruct the flow path of the liquid passing through the sorption element according to the invention in the same way as in a filter element. In fact, clogging is avoided, while the probability of the capture of contaminants is increased. Even though the probability of the flow to hit a contaminant particulate captured by the surface of the sorbent sheet material is enhanced when the flow is directed along the surface of the sheet, the flow is not blocked by such obstacle, but merely deviated. Due to coalescence interaction, the obstacle in form of a contaminant particulate may capture contaminants from the aqueous liquid while the flow of the aqueous liquid deviates easily around the obstacle. The lifetime of the sorption element is thus determined by the capacity of the sorbent material for retaining contaminants rather than by clogging of the sorption element before the sorbent material is used up.

A sorption medium according to the invention may be arranged in the at least one opening of a frame structure, thereby forming a sorption element according to the invention. Alternatively, the sorption medium may also be arranged without a supporting frame structure directly inside a duct to fill out the opening of the duct, wherein the channels of the sorption medium are aligned substantially parallel to the principal axis of the duct to provide a fluid passage through the sorption medium from an input end of the duct to an output end of the duct. Thereby, a sorption device module for removing hydrocarbon contaminants from an aqueous liquid flowing through the duct may be provided.

Further according to another embodiment of a sorption medium according to the invention, the joints are arranged along bonding lines extending from the first end face to the second end face, wherein bonding lines between subsequent pairs of sheets are displaced in a direction transversely to the bonding lines.

Thereby, a cellular structure of substantially parallel channels is formed. The cellular structure provides fluid passages through the sorption medium guiding the fluid flow parallel to and along the surface of the sheets. By displacing the bonding lines with respect to each other in a transverse direction, an expandable structure of adjacent channels is achieved, yet limiting the cross-sectional area of the channels in order to avoid that a large opening in the sorption medium may be formed spontaneously, thus allowing contaminated fluid to bypass the sorbent sheet material and thus leak through the sorption medium.

The cellular structure ensures an even distribution of the sheets of sorbent material throughout the cross-section of the opening of the frame structure or duct filled by the sorption medium also under operational conditions.

Further according to another embodiment of a sorption medium according to the invention, the bonding lines are arranged with an essentially constant interspacing.

Thereby, similar channels are formed, the channels having a similar cross-section with an essentially regular polygonal cross-section. This has the advantage that the flow resistance per cross-sectional unit area of the sorption medium is essentially uniform across the sorption medium.

Further according to another embodiment of a sorption medium according to the invention, the bonding lines between subsequent pairs of sheets are displaced transversely with respect to each other by essentially half the interspacing. Thereby, a regular rhombic channel cross-section is achieved.

In a further aspect of the invention, a method for producing a sorption medium for the separation of hydrocarbon contaminants from an aqueous liquid is provided, the method comprising the steps of:
- rolling up a plurality of windings of a first web of flexible sorbent sheet material together with at least one second web of flexible sorbent sheet material onto a spool member, thereby forming a roll of flexible sorbent sheet material,
- while rolling up the first and second webs, bonding adjacent faces of the webs together by a plurality of interspaced line-shaped and/or punctiform joints, the joints being arranged along bonding lines, the bonding lines between subsequent pairs of layers being displaced with respect to each other in a direction transverse to the bonding lines,
- cutting the roll open along a radial plane parallel to the winding axis of the roll, and
- flattening out the rolled up material so as to form a stack of sheets of sorbent sheet material in juxtaposition to each other, opposite edges of the sheets defining a first end face and a second end face opposite the first end face, wherein subsequent sheets are bonded together by the joints so as to provide channels, each of the channels extending from a feed opening at the first end face to a discharge opening at the second end face.

Thereby, a method is provided for producing a stratified sorption medium according to the invention from a sorbent sheet material where subsequent layers within the sorption medium are bonded together so as to form an arrangement of closely packed channels, wherein the sorption medium is expandable in the stacking direction.

Using a spooling type machine according to the claimed method has the advantage that a sorption medium may be produced rapidly and at low cost in a single spooling step only followed by the simple steps for removing the rolled-up material from the spooling set-up, cutting open the roll and flattening out the material.

In contrast to known spooling arrangements for producing filter media, the advantage of the present method for producing a sorption medium is that, in a single production process, a stack with a plurality of sheets of sorbent sheet material may be produced, wherein all adjacent faces of the sheets are bonded to each other.

By bonding adjacent sheets together, it is achieved that the distance between adjacent sheets defining a channel is limited and the fluid flow is kept close to and substantially parallel along the surface of the sorbent sheet. Where the bonding lines are substantially continuous lines, a structure of separate, substantially parallel channels is formed.

Alternatively, adjacent sheets may be attached to each other by punctiform joints, thereby forming a network of channels allowing the fluid flow to move essentially freely in directions parallel to the plane of the sheets, while the fluid flow in directions perpendicular thereto is confined between adjacent sheets.

Further according to another embodiment, the method for producing a sorption medium comprises the further steps of:
- subdividing the stack into sub-stacks by cutting the stack substantially perpendicular and/or substantially parallel to the channels,
- stacking and bonding together a plurality of sub-stacks on top of each other with the channels of the sub-stacks arranged substantially parallel to each other thereby forming a block with channels extending from a first end face of the block to a second end face of the block.

By cutting and stacking, the sorption medium may easily be adapted to suitable shapes of different openings, in particular when producing high stacks with a short channel length.

Alternatively, by stacking and bonding together a plurality of stacks on top of each other with the channels of the stacks arranged substantially parallel to each other, a block with channels extending from a first end face of the block to a second end face of the block may be formed, in the case where the outline of the stack already matches the outline of the desired block or where the block after stacking and bonding operations is subdivided/cut in order to match the desired block shape.

Building a block from pre-fabricated stacks or sub-stacks according to the above-mentioned embodiments of the invention has the advantage that the number of stacking and bonding operations is largely reduced, thereby rendering the production process of the blocks much more efficient as compared to a tedious assembly of blocks by stacking individual sheets and bonding the individual sheets to each other one by one.

Further according to another embodiment of a method for producing a sorption medium according to the invention, the sorbent sheet material is an oleophilic and/or hydrophobic material, such as a polypropylene fabric or a polyethylene fabric, so as to selectively capture and retain oily contaminants from the aqueous liquid.

### Brief Description of the Drawings

The invention is explained in detail below with reference to the drawings. The drawings show schematically in
Fig. 1 a side view of one embodiment of a sorption element,
Fig. 2 a cross-sectional view of the sorption element of Fig. 1, the cross-section being taken along line II-II in Fig. 1,
Fig. 3 a side view of a further embodiment of a sorption element,
Fig. 4 a cross-sectional view of the sorption element of Fig. 3, the cross-section being taken along line IV-IV in Fig. 3,
Fig. 5 a cross-sectional view of a sorption medium formed by a stack of sorbent sheet material interconnected by bonding lines, the cross-section being taken in a plane perpendicular to the bonding lines,
Fig. 6 an arrangement for rolling two webs of sorbent sheet material together onto a spool member while applying a bonding agent, and
Fig. 7 a system for cleaning bilge water inside the hull of a ship using a sorption element according to the invention.

### Detailed Description of the Invention

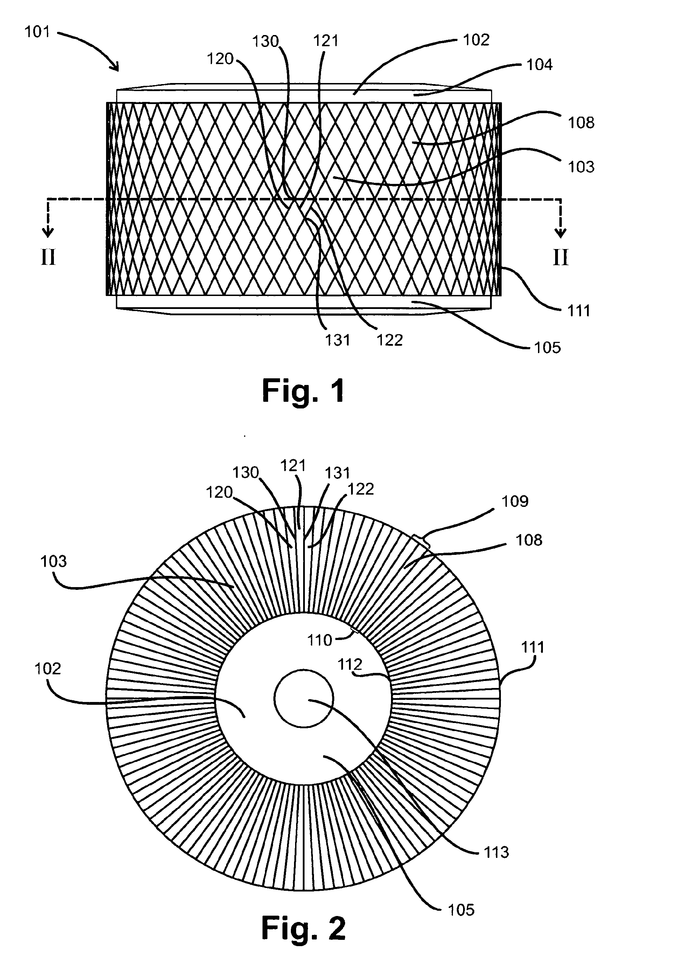

Fig. 1 shows a side view of a first embodiment of a sorption element 101 according to the invention. The sorption element 101 comprises a frame structure 102 and a sorption medium 103. The frame structure comprises at least a first base plate 104 and a second base plate 105 arranged parallel with respect to each other at a distance leaving an opening at a circumferential outer surface of the cylinder defined by the base plates 104, 105.

The opening of the frame structure is filled with the sorption medium 103 comprising sheets 120, 121 of a sorbent sheet material, the sheets 120, 121 extending in an axial direction from the first base plate 104 to the second base plate 105 and in a radial direction from the circumferential opening towards the inner side of the cylinder.

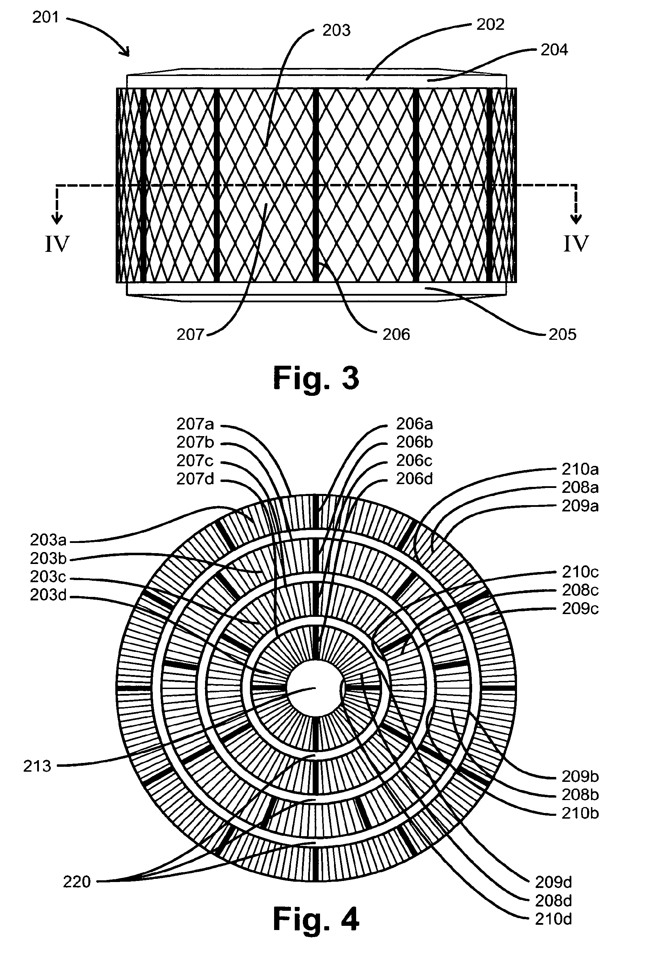

It should be noted that in Fig. 1 and Fig. 2, as well as in Fig. 3 and Fig. 4, the filling of the frame structure openings with a sorption medium is only indicated schematically. In practice, the sheets of the sorption medium are densely packed. The number of sheets per unit volume is determined by balancing the goal of providing a large interaction surface against the goal of providing a fluid connection with a low flow resistance.

The frame structure 102 may comprise a hollow central pole (not shown) connecting the base plates 104, 105 to strengthen the frame 102, wherein the sheets of the sorption medium 103 are arranged radially around the hollow central pole. The wall of the central pole comprises openings in order to allow fluid to pass through the walls of the pole.

Alternatively, a sorption medium 103 may be provided using a material which is sufficiently stiff with respect to deformation in the direction perpendicular to the base plates 104, 105 in order to form a self-supporting sorption medium 103.

Base plates 104, 105 may e.g. be glued to the sorption medium 103 or directly moulded together with the sorption medium 103, thereby achieving a sealing attachment of the base plates 104, 105 to the sorption medium 103.

Adjacent sheets 120, 121, 122 are bonded together along substantially radial bonding lines 130, 131, wherein bonding lines 130 between one pair of adjacent sheets 120, 121 and bonding lines 131 between a subsequent pair of sheets 121, 122 are displaced with respect to each other in a direction transverse to the bonding lines 130, 131. Thereby, a network of sorbent sheet material is formed defining channels 108 extending in a radial direction.

Fig. 2 shows a projection of a cross-section of the sorption element of Fig. 1 along line 11-11 in Fig. 1. The sorption medium 102 is arranged to form a hollow cylinder, wherein the channels 108 of the sorption medium 102 extend radially inwards from a feed opening 109 at the circumferential outer surface 111 to a discharge opening 110 at the inner surface 112. The cross-sectional shape of the sorption element 101 may be defined by the shape of the frame structure 102, which in the present case is circular as defined by the circular shape of the base plates 104, 105. Other cross-sectional shapes with an arbitrary contour, such as defined by any closed curved line or a closed polygon may be contemplated.

In practice, the actual shape of the sorption element may often be determined by the shape of the housing in which the sorption element will be arranged, when in use. For example, if the sorption element 101 is to replace a quite common filter element for standard circular housings, such as housings HDU 15/15, HDU 20/38, or HDU 27/27, all available from C.C. Jensen A/S, Denmark, advantageously, the sorption element 101 has a circular cross-section and dimensions compatible with such a standard housing.

At least one of the base plates 104, 105 is provided with a central opening 113. Thereby, a fluid pathway through the sorption element is provided from the opening at the circumferential outer surface 111 through the channels 108 of the sorption medium 103 and through the central opening 113. The sorption element may in principle be operated in both flow directions. In practice, however, the circumferential outer surface is often used as fluid input and the inner surface 112 and the opening 113 as fluid output of the sorption element. The fluid flow of an aqueous liquid to be cleaned in the sorption element thus enters the sorption element 101 at the feed openings 109 of the channels 108 of the sorption medium 103, passes along the surface of the sorbent sheet material defining the channels 108, leaves the sorption medium 103 at the discharge openings 110 of the channels 108, and leaves the sorption element 101 through the opening 113.

The sorbent material of the sorption medium 103 comprises an oleophilic and/or hydrophobic material, such as a polypropylene fabric or a polyethylene fabric. On the way through the sorption medium 103, the concentration of hydrocarbon contaminants, such as oil, fuel, or the like, is substantially removed from the aqueous liquid by sorption interaction binding the oily contaminants to the sorbent material and leaving the increasingly purified water to flow on.

Fig. 3 and Fig. 4 show a further embodiment of a sorption element 201 according to the invention, respectively in a side projection and in cross-section along line IV-IV in Fig. 3. The sorption element 201 of Fig. 3 and Fig. 4 comprises a frame structure 202 forming a hollow cylinder with parallel base plates 204, 205 arranged at a distance from each other and connected by rib members 206 extending between the base plates 204, 205.

The base plates 204, 205 and the rib members 206 define openings 207 for fluid communication between the circumferential outer surface and the inner surface of the hollow cylinder. The openings 207 are filled with a sorption medium 203 of layered sheet material, the sorption medium comprising radial channels 208 as explained above with reference to Fig. 1 and Fig. 2.

The base plates may comprise concentric members 204a-d, 205a-d (not shown), connected by corresponding rib members 206a-d, the concentric members 204a-d, 205a-d and the rib members 206a-d defining openings 207a-d, each opening 207a-d being filled with a sorption medium 203a-d. Thereby, the sorption media 203a-d are arranged in series, wherein the discharge openings 210a, 210b, 210c of the channels 208a, 208b, 208c of a first sorption medium 203a, 203b, 203c are arranged opposite the feed openings 209b, 209c, 209d of the channels 208b, 208c, 208d of a subsequent sorption medium 203b, 203c, 203d, so as to feed liquid discharged from the first sorption medium 203a, 203b, 203c to the subsequent sorption medium 203b, 203c, 203d, respectively.

As explained above, a fluid path is provided for the aqueous liquid to flow through the openings 207 in the circumferential outer surface of the hollow cylinder through the sorption medium 203, and through the at least one opening 213. Flowing along that fluid path, the aqueous liquid is cleaned by interaction with the oleophilic and/or hydrophobic sorbent sheet material, such as adsorption or absorption, when flowing through the channels 208 of the sorption medium 203.

Advantageously, a small spacing 220 may be provided at the transition between sorption media 203a-d as a buffer volume acting as manifold in order to equally distribute the fluid flow from the discharge openings 210a-c of a first sorption medium 203a-c to the feed openings 209b-d of the respective subsequent sorption medium 203b-d.

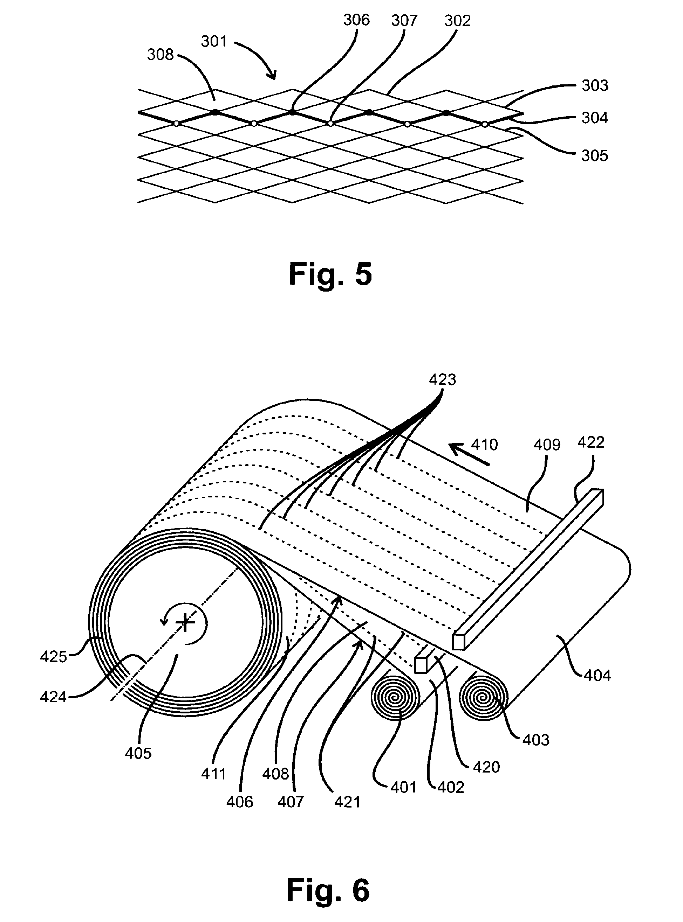

A cross-sectional view of one embodiment of a sorption medium 301 according to the invention is shown in Fig. 5. The sorption medium comprises a stack of sheets 302-305 of sorbent, preferably oleophilic and/or hydrophobic material. The cross-section is taken in a plane perpendicular to the sheets of the stack. A single sheet 303 of sorbent material is emphasised (thick line) to illustrate the orientation of the sheets in the stack of layers. Adjacent sheets are attached to each other by joints. The joints may be formed as line-shaped joints and/or punctiform joints arranged so as to form a network of vertically interconnected sheets, where the vertical direction is substantially perpendicular to the plane of the sheets. The joints between subsequent pairs of sheets, are displaced with respect to each other in a direction parallel to the plane of the sheets so as to form an expandable stratified sorption medium with channels, the channels being defined by the interconnected sheets of sorbent material and providing a fluid pathway along the surface of the sorbent material. In the embodiment of Fig. 5, the joints are bonding lines 306, 307 arranged with an essentially constant distance from each other, in the drawing extending perpendicular to the drawing plane. The bonding lines 306 (dots) on one side of a given sheet 304 in the stack are displaced with respect to the bonding lines 307 (circles) on the opposite side of the sheet 304 by half the distance between the lines in a direction perpendicular to the bonding lines 306, 307 and in the plane of the sheet 304. Thereby a cellular structure of essentially parallel channels 308 is formed, the channels shown in the drawing having a quadrilateral, more specifically a rhombic cross-section, and extending perpendicular to the drawing plane.

Other arrangements of the joints in a network of vertically interconnected sheets may be contemplated in order to form an expandable stratified sorption medium, for example a substantially periodic arrangement of punctiform joints with a rectangular unit cell, each of the corners of the unit cell being defined by a punctiform joint, wherein the corner points of each unit cell on one side of a given sheet are located in the centre of corresponding unit cells on the opposite side of the sheet. The fluid path provided through such a sorption medium is thus defined by the sheets with an open network of channels between adjacent sheets.

Fig. 6 shows an arrangement for use in a method according to the invention for producing a sorption medium. Sorbent sheet material is provided from at least one supply roll 401 with a first web 402 of sorbent sheet material and one roll 403 with a second web 404 of sorbent sheet material. The first and second webs 402, 404 are spooled together onto a common spool member 405, wherein each layer of web 402, 404 on the spool member 405 has an inward surface 406, 407 facing towards the spool axis 424 and an outward surface 408, 409 facing away from the spool axis 424.

While rolling up the first and second webs 402, 404 together onto the spool member 405, glue is applied to the moving web 402, 404 on the section from the supply roll 401, 403 to the spool member 424, so as to form bonding lines substantially parallel to the direction of the movement of the web 402, 404.

In order to interconnect all of the layers of roll 425 on the spool member 405 with each other, bonding lines need to be formed between all adjacent layers of sorbent sheet material spooled onto the spool member 405. Therefore, the outward surface 408 of the first web is bonded to the inward surface 407 of the second web of the same spooling turn and the inward surface 406 of the first web is bonded to the outward surface 411 of the second web of the previous spooling turn.

This interconnection of all layers may be achieved by applying glue to the respective outward surfaces 408, 409 of both the first web 402 and the second web 404, as shown in Fig. 6. Alternatively, the glue may be applied to the inward surfaces 406, 407 of both the first web 402 and the second web 404, or to the outward and inward surfaces 406, 408 of the first web 402, or to the outward and inward surfaces 407, 409 of the second web 404.

In the arrangement of Fig. 6, glue is provided through a plurality of nozzles distributed over the width of the webs, wherein a first set of nozzles 420 provides glue for a first set of bonding lines 421 on the outward surface 408 of the first web 402, and a second set of nozzles 422 provides glue for a second set of bonding lines 423 on the outward surface 409 of the second web 404. The first set of nozzles 420 is, with respect to the second set of nozzles 422, displaced in a direction transverse to the direction of the movement of the webs (indicated by arrow 410), thereby forming the first and the second set of bonding lines 421, 423 such that they are displaced with respect to each other in a direction transverse to the bonding lines 421, 423.

It should be noted, that alternative ways to form bonds between adjacent layers instead of gluing may be contemplated, such as thermal processing, laser processing or ultrasonic processing.

In order to produce a stack of sheets of sorbent sheet material, the roll 425 of interconnected webs 402, 404 may be cut open along a radial plane parallel to the spool-axis, removed from the spool member 405 and flattened out. The stack of sheets thus produced may then be cut into smaller sub-stacks by cutting across the stack, e.g. substantially perpendicular to the bonding lines and/or substantially parallel to the bonding lines. A block may be formed by stacking and bonding together the sub-stacks on top of each other, wherein the channels of the sub-stacks are aligned essentially parallel to each other. The interconnected sheets of the stack, sub-stacks or block of sheets form a stratified sorption medium with interconnected layers defining channels for passing a fluid through the sorption medium, wherein the fluid is guided essentially parallel and close to the surface of the sorbent sheet material forming the layers.

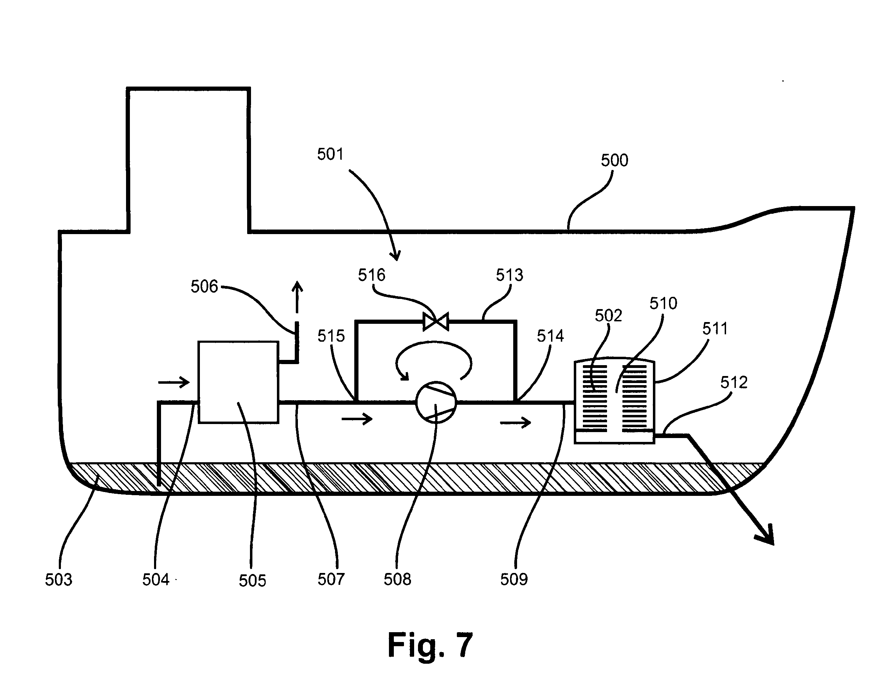

Advantageously, a sorption element according to the invention may be used in a system for cleaning the bilge water inside the hull of a ship 500 or other maritime vessels. Fig. 7 shows schematically one embodiment of a bilge water cleaning system 501 using a sorption element 502 according to the invention. Bilge water 503 comprising oily contaminants is transferred through an input port 504 into an oily water separator 505 of a common type, such as a gravitational oily water separator. The oily water separator 505 may have a sludge output port 506 for transferring the sludge of concentrated oily contaminants into an oil waste tank (not shown).

By the action of the oily water separator 505 the concentration of the oily contaminants in the water is reduced, thereby producing clean water that may be removed from the oily water separator 505 through a clean water output port 507. The water output from the oily water separator 505 still contains oily contaminants at a concentration level well above what is legal for legal discharge of waste water in compliance with international environmental regulations. The aqueous liquid output through the clean water output port 507 of the oily water separator 505 is therefore transferred to a second cleaning stage.

The second cleaning stage comprises a pump 508 feeding the aqueous liquid to an input port 509 of a sorption device 510. The sorption device 510 comprises a housing 511 in which a sorption element 502 is arranged in sealing engagement with inner walls of the housing 511 so as to provide a fluid pathway from the input port 509 of the sorption device housing 511 to an output port 512 of the sorption device housing 511 only through a sorption medium of the sorption element 502. As the aqueous liquid passes through the sorption medium, oily contaminants are held back by the, preferably oleophilic and/or hydrophobic, sorption medium, while the water easily passes through the sorption medium to the output port 512 of the sorption device. Using a sorption element 502 according to the invention, it has been shown in practice that an oily contaminant concentration of below 5ppm may be achieved for the water output from the sorption device. The water released through the output port of the second stage of the bilge water cleaning system may therefore be discharged over board in compliance with environmental regulations for the discharge of waste water at sea.

Advantageously, the second cleaning stage of the above bilge water system 501 further comprises a recirculation line 513, preferably provided with a valve 516, the recirculation line 513 connecting the discharge side of the pump 508 back to the suction side of the pump 508. At the discharge side branching point 514, part of the liquid discharged from the pump 508 is branched off into the return line 513 rather than being transferred to the sorption device. Due to the pressure difference between the discharge side and the suction side, the branched-off part of the liquid is driven to the suction side branching point 515, where it is mixed with liquid coming from the oily water separator 505, and fed back into the pump 508. By this arrangement, detrimental effects of a sudden rise or transients in the concentration of contaminants, e.g. due to a "plug" of oil being accidentally released from the oily water separator and transferred to the second cleaning stage, may be mitigated.

### List of reference numbers

- 101: sorption element
- 102: frame structure
- 103: sorption medium
- 104, 105: base plate
- 108: channel
- 109, 110: opening
- 111: outer surface
- 112: inner surface
- 113: opening
- 120, 121, 122: sheet
- 130, 131: bonding lines

- 201: sorption element
- 202: frame structure
- 203, 203a-d: sorption medium
- 204, 205: base plate
- 206, 206a-d: rib
- 207, 207a-d: opening
- 208, 208a-d: channel
- 209, 209a-d: opening
- 210, 210a-d: opening
- 213: opening
- 220: spacing

- 301: sorption medium
- 302, 303, 304, 305: sheets
- 306, 307: bonding lines
- 308: channel

- 401: first roll
- 402: first web
- 403: second roll
- 404: second web
- 405: spool member
- 406, 407: inward surface
- 408, 409, 411: outward surface
- 410: direction of movement
- 420, 422: nozzle set
- 421,423: bonding lines
- 424: spool axis

- 500: ship
- 501: bilge water cleaning system
- 502: sorption element
- 503: bilge water
- 504: input port
- 505: oily water separator
- 506: sludge output port
- 507: clean water output port
- 508: pump
- 509: input port
- 510: sorption device
- 511: housing
- 512: output port
- 513: recirculation line
- 514, 515: branching point
- 516: valve

## Claims

1. Sorption element (101) for removing hydrocarbon contaminants from an aqueous liquid, the sorption element (101) comprising a frame structure (102) with at least one opening providing a fluid connection between an input side and an output side of the sorption element (102), each opening being filled with a sorption medium (103), comprising stacked sheets (120, 121, 122) of a sorbent material, the sheets (120, 121, 122) being bonded together by a plurality of interspaced line-shaped joints (130, 131) and/or punctiform joints (130, 131), wherein the sheets (120, 121, 122) of the sorbent material are arranged to extend in the direction from the input side to the output side, thereby forming a plurality of channels (108), each channel being defined by sorbent sheet material and having a feed opening (109) towards the input side and a discharge opening (110) towards the output side.

2. Sorption element according to claim 1, wherein the frame structure (102) has the shape of a hollow cylinder, preferably a right circular hollow cylinder, the cylinder having a first end (104), a second end (105) opposite the first end (104), at least one outer face (111) and at least one inner face (112), the outer and inner faces (111, 112) extending from the first end (104) to the second end (105).

3. Sorption element according to claim 2, wherein the outer face (111) of the hollow cylinder faces towards the input side and the inner face (112) of the hollow cylinder faces towards the output side, the channels extending from the outer face (111) to the inner face (112) in a substantially radial direction.

4. Sorption element according to claim 2 or claim 3, wherein the frame structure (202) comprises ring-shaped members (204, 205) in a plane substantially perpendicular to the cylinder axis, the ring-shaped members (204, 205) being supported at a distance from each other by rib-members (206), thereby defining the openings (207) of the frame structure (202).

5. Sorption element according to any of the preceding claims, wherein the frame structure (102, 202) is made of a combustible material, such as wood, ply wood, fibre, or fibreboard.

6. Sorption element according to any of the preceding claims, wherein the sorbent sheet material is an oleophilic and/or hydrophobic material.

7. Sorption element according to any of the preceding claims, wherein a plurality of sorption media (203a-d) is arranged in series, the discharge openings (210a-c) of the channels (208a-c) of a first sorption medium (203a-c) being arranged opposite the feed openings (209b-d) of the channels (208b-d) of a subsequent sorption medium (203b-d) so as to feed liquid discharged from the first sorption medium (203a-c) to the subsequent sorption medium (203b-d).

8. Sorption element according to claim 7 and any of the claims 2-6, wherein the subsequent sorption medium (203b-d) is arranged inside the first sorption medium (203a-c), the outer face of the subsequent sorption medium (203b-d) being located opposite the inner face of the first sorption medium (203a-c).

9. Use of a sorption element according to any of the claims 1 - 8 for removing hydrocarbon contaminants from an aqueous liquid.

10. Sorption medium (301) for removing hydrocarbon contaminants from an aqueous liquid, the sorption medium comprising sheets (302, 303, 304, 305) of a sorbent sheet material, the sheets (302, 303, 304, 305) being arranged in juxtaposition to each other so as to form a stack of layers, opposite edges of the stacked sheets defining a first end face of the stack and a second end face of the stack opposite the first end face, wherein adjacent layers are bonded together by a plurality of interspaced line-shaped joints and/or punctiform joints, thereby providing a plurality of channels (308), each channel being defined by the sorbent sheet material and extending from a feed opening at the first end face to a discharge opening at the second end face.

11. Sorption medium according to claim 10, wherein the joints are arranged along bonding lines (306, 307) extending from the first end face to the second end face, wherein bonding lines (306, 307) between subsequent pairs of sheets (303/304), (304/305) are displaced in a direction transversely to the bonding lines (306, 307).

12. Sorption medium according to claim 11 wherein the bonding lines (306, 307) are arranged with an essentially constant interspacing.

13. Sorption medium according to claim 12, wherein the bonding lines (306, 307) between subsequent pairs of sheets (303/304, 304/305) are displaced transversely with respect to each other by essentially half the interspacing.

14. Method for producing a sorption medium for the separation of hydrocarbon contaminants from an aqueous liquid, the method comprising the steps of:
- rolling up a plurality of windings of a first web (402) of flexible sorbent sheet material together with at least one second web (404) of flexible sorbent sheet material onto a spool member (405), thereby forming a roll (425) of flexible sorbent sheet material,
- while rolling up the first and second webs (402, 404), bonding adjacent faces (406/408, 407/411) of the webs (402, 404) together by a plurality of interspaced line-shaped and/or punctiform joints, the joints being arranged along bonding lines (421, 423), the bonding lines (421, 423) between subsequent pairs of layers being displaced with respect to each other in a direction transverse to the bonding lines (421, 423),
- cutting the roll open along a radial plane parallel to the winding axis (424) of the roll (425), and
- flattening out the rolled up material so as to form a stack of sheets of sorbent sheet material in juxtaposition to each other, opposite edges of the sheets defining a first end face and a second end face opposite the first end face, wherein subsequent sheets are bonded together by the joints so as to provide channels, each of the channels extending from a feed opening at the first end face to a discharge opening at the second end face.

15. Method according to claim 14, the method comprising the further steps of:
- subdividing the stack into sub-stacks by cutting the stack substantially perpendicular and/or substantially parallel to the channels
- stacking and bonding together a plurality of sub-stacks on top of each other with the channels of the sub-stacks arranged substantially parallel to each other thereby forming a block with channels extending from a first end face of the block to a second end face of the block.

16. Method according to any of the claims 12-13, wherein the sorbent sheet material is an oleophilic and/or hydrophobic material.

## Patentansprüche

1. Sorptionselement (101) zum Entfernen von Kohlenstoffwasserstoffverunreinigungen aus einer wässrigen Flüssigkeit, wobei das Sorptionselement (101) eine Rahmenstruktur (102) mit wenigstens einer Öffnung aufweist, die eine Fluidverbindung zwischen einer Einlassseite und einer Auslassseite des Sorptionselements (102) schafft, wobei jede Öffnung mit einem Sorptionsmedium (103) gefüllt ist, mit gestapelten Lagen (120, 121, 122) eines Sorptionsmaterials, wobei die Lagen (120, 121, 122) durch mehrere beabstandete linienförmige Verbindungen (130, 131) und/oder punktförmige Verbindungen (130, 131) aneinander haften, wobei die Lagen (120, 121, 122) aus dem Sorptionsmaterial so angeordnet sind, dass sie sich in der Richtung von der Einlassseite zu der Auslassseite erstrecken, um dadurch mehrere Kanäle (108) zu bilden, wobei jeder Kanal durch Sorptionslagenmaterial definiert ist und eine Zuführöffnung (109) zur Einlassseite und eine Abführöffnung (110) zu der Auslassseite besitzt.

2. Sorptionselement nach Anspruch 1, wobei die Rahmenstruktur (102) die Form eines Hohlzylinders, vorzugsweise eines rechtwinkligen kreisförmigen Hohlzylinders, besitzt, wobei der Zylinder ein erstes Ende (104), ein zweites Ende (105) gegenüber dem ersten Ende (104), wenigstens eine Außenfläche (111) und wenigstens eine Innenfläche (112) besitzt, wobei sich die Außen- und die Innenfläche (111, 112) von dem ersten Ende (104) zu dem zweiten Ende (105) erstrecken.

3. Sorptionselement nach Anspruch 2, wobei die Außenfläche (104) des Hohlzylinders der Innenseite zugewandt ist und die Innenfläche (105) des Hohlzylinders der Außenseite zugewandt ist, wobei sich die Kanäle von der Außenfläche (111) zu der Innenfläche (112) in einer im Wesentlichen radialen Richtung erstrecken.

4. Sorptionselement nach Anspruch 2 oder Anspruch 3, wobei die Rahmenstruktur (202) in einer Ebene, die zu der Zylinderachse im Wesentlichen senkrecht ist, ringförmige Elemente (204, 205) umfasst, wobei die ringförmigen Elemente (204, 205) durch Stegelemente (206) in gegenseitigem Abstand unterstützt sind, um dadurch die Öffnungen (207) der Rahmenstruktur (202) zu definieren.

5. Sorptionselement nach einem der vorhergehenden Ansprüche, wobei die Rahmenstruktur (102, 202) aus einem brennbaren Material wie etwa Holz, Sperrholz, Fasern oder Faserplatte hergestellt ist.

6. Sorptionselement nach einem der vorhergehenden Ansprüche, wobei das Sorptionslagenmaterial ein oleophiles und/oder hydrophobes Material ist.

7. Sorptionselement nach einem der vorhergehenden Ansprüche, wobei mehrere Sorptionsmedien (203a-d) in Reihe angeordnet sind, wobei die Abführöffnungen (210a-c) der Kanäle (208a-c) eines ersten Sorptionsmediums (203a-c) gegenüber den Zuführöffnungen (209b-d) der Kanäle (208b-d) eines nachfolgenden Sorptionsmediums (203b-d) angeordnet sind, um Flüssigkeit, die aus dem ersten Sorptionsmedium (203a-c) ausgestoßen wird, dem nachfolgenden Sorptionsmedium (203b-d) zuzuführen.

8. Sorptionselement nach Anspruch 7 und einem der Ansprüche 2-6, wobei das nachfolgende Sorptionsmedium (203b-d) in dem ersten Sorptionsmedium (203a-c) angeordnet ist, wobei sich die Außenfläche des nachfolgenden Sorptionsmediums (203b-d) gegenüber der Innenfläche des ersten Sorptionsmediums (203a-c) befindet.

9. Verwendung eines Sorptionselements nach einem der Ansprüche 1-8, um Kohlenstoffwasserstoffverunreinigungen aus einer wässrigen Flüssigkeit zu entfernen.

10. Sorptionsmedium (301) zum Entfernen von Kohlenstoffwasserstoffverunreinigungen aus einer wässrigen Flüssigkeit, wobei das Sorptionsmedium Lagen (302, 303, 304, 305) aus einem Sorptionslagenmaterial umfasst, wobei die Lagen (302, 303, 304, 305) nebeneinander angeordnet sind, um einen Stapel von Lagen zu bilden, wobei gegenüberliegende Kanten der gestapelten Lagen eine erste Stirnfläche des Stapels und eine zweite Stirnfläche des Stapels gegenüber der ersten Stirnfläche definieren, wobei benachbarte Lagen durch mehrere beabstandete linienförmige Verbindungen und/oder punktförmige Verbindungen aneinander haften, um dadurch mehrere Kanäle (308) zu schaffen, wobei jeder Kanal durch das Sorptionslagenmaterial definiert ist und sich von einer Zuführöffnung an der ersten Stirnfläche zu einer Abführöffnung an der zweiten Stirnfläche erstreckt.

11. Sorptionsmedium nach Anspruch 10, wobei die Verbindungen längs Haftlinien (306, 307) angeordnet sind, die sich von der ersten Stirnfläche zu der zweiten Stirnfläche erstrecken, wobei Haftlinien (306, 307) zwischen aufeinander folgenden Paaren von Lagen (303/304), (304/305) in einer Richtung quer zu den Haftlinien (306, 307) versetzt sind.

12. Sorptionsmedium nach Anspruch 11, wobei die Haftlinien (306, 307) mit einem im Wesentlichen konstanten Zwischenraum angeordnet sind.

13. Sorptionsmedium nach Anspruch 12, wobei die Haftlinien (306, 307) zwischen aufeinander folgenden Paaren von Lagen (303/304, 304/305) zueinander im Wesentlichen um die Hälfte des Zwischenraums quer versetzt sind.

14. Verfahren für die Herstellung eines Sorptionsmediums zum Trennen von Kohlenstoffwasserstoffverunreinigungen von einer wässrigen Flüssigkeit, wobei das Verfahren die folgenden Schritte umfasst:
- Aufrollen mehrerer Windungen einer ersten Bahn (402) aus einem flexiblen Sorptionslagenmaterial zusammen mit wenigstens einer zweiten Bahn (404) aus flexiblem Sorptionslagenmaterial auf ein Spulenelement (405), um dadurch eine Rolle (425) aus flexiblem Sorptionslagenmaterial zu bilden,
- während des Aufrollens der ersten und der zweiten Bahn (402, 404) Befestigen benachbarter Flächen (406/408, 407/411) der Bahnen (402, 404) aneinander durch mehrere beabstandete linienförmige und/oder durch mehrere punktförmige Verbindungen, wobei die Verbindungen längs Haftlinien (421, 423) angeordnet sind, wobei die Haftlinien (421, 423) zwischen aufeinander folgenden Paaren von Schichten in einer Richtung quer zu den Haftlinien (421, 423) zueinander versetzt sind,
- Aufschneiden der Rolle längs einer radialen Ebene parallel zu der Wicklungsachse (424) der Rolle (425) und
- Abflachen des aufgerollten Materials, um einen Stapel aus nebeneinander liegenden Lagen aus Sorptionslagenmaterial zu bilden, wobei gegenüberliegende Kanten der Lagen eine erste Stirnfläche und eine zweite Stirnfläche gegenüber der ersten Stirnfläche definieren, wobei aufeinander folgende Lagen durch die Verbindungen aneinander haften, um Kanäle zu schaffen, wobei sich jeder der Kanäle von einer Zuführöffnung an der ersten Stirnfläche zu einer Abführöffnung an der zweiten Stirnfläche erstreckt.

15. Verfahren nach Anspruch 14, wobei das Verfahren ferner die folgenden Schritte umfasst:
- Unterteilen des Stapels in Unterstapel durch Schneiden des Stapels im Wesentlichen senkrecht und/oder im Wesentlichen parallel zu den Kanälen,
- Aufeinanderstapeln und Befestigen mehrerer Unterstapel aneinander, wobei die Kanäle der Unterstapel im Wesentlichen parallel zueinander angeordnet sind, um dadurch einen Block mit Kanälen zu bilden, die sich von einer ersten Stirnfläche des Blocks zu einer zweiten Stirnfläche des Blocks erstrecken.

16. Verfahren nach einem der Ansprüche 12-13, wobei das Sorptionslagenmaterial ein oleophiles und/oder hydrophobes Material ist.

## Revendications

1. Élément de sorption (101) pour éliminer des contaminants hydrocarbures à partir d'un liquide aqueux, l'élément de sorption (101) comprenant une structure de support (102) avec au moins un orifice fournissant un raccordement de fluide entre un côté d'entrée et un côté de sortie de l'élément de sorption (102), chaque orifice étant rempli avec un milieu de sorption (103), comprenant des feuillets empilés (120, 121, 122) d'un matériau sorbant, les feuillets (120, 121, 122) étant reliés ensemble par une pluralité de raccords linéaires (130, 131) et/ou de raccords ponctiformes (130, 131) espacés entre eux, dans lequel les feuillets (120, 121, 122) du matériau sorbant sont agencés de manière à s'étendre dans la direction à partir du côté d'entrée vers le côté de sortie, en formant ainsi une pluralité de canaux (108), chaque canal étant défini par un matériau de feuillet sorbant et ayant un orifice d'alimentation (109) dirigé vers le côté d'entrée et un orifice d'évacuation (110) dirigé vers le côté de sortie.

2. Élément de sorption selon la revendication 1, dans lequel la structure de support (102) a la forme d'un cylindre creux, de préférence un cylindre creux circulaire droit, le cylindre ayant une première extrémité (104), une seconde extrémité (105) opposée à la première extrémité (104), au moins une face extérieure (111) et au moins une face intérieure (112), les faces extérieure et intérieure (11, 112) s'étendant à partir de la première extrémité (104) vers la seconde extrémité (105).

3. Élément de sorption selon la revendication 2, dans laquelle la face extérieure (111) du cylindre creux est dirigée vers le côté d'entrée, et la face intérieure (112) du cylindre creux est dirigée vers le côté de sortie, les canaux s'étendant à partir de la face extérieure (111) vers la face intérieure (112) dans une direction sensiblement radiale.

4. Élément de sorption selon la revendication 2 ou la revendication 3, dans lequel la structure de support (202) comprend des éléments annulaires (204, 205) dans un plan sensiblement perpendiculaire à l'axe du cylindre, les éléments annulaires (204, 205) étant supportés à distance les uns des autres par des éléments de nervures (206), définissant ainsi les orifices (207) de la structure de support (202).

5. Élément de sorption selon l'une quelconque des revendications précédentes, dans lequel la structure de support (102, 202) est faite d'un matériau combustible, tel que du bois, du contreplaqué, des fibres ou des panneaux de fibres.

6. Élément de sorption selon l'une quelconque des revendications précédentes, dans lequel le matériau de feuillet sorbant est un matériau oléophile et/ou hydrophobe.

7. Élément de sorption selon l'une quelconque des revendications précédentes, dans lequel une pluralité de milieux de sorption (203a-d) est agencée en série, les orifices d'évacuation (210a-c) des canaux (208a-c) d'un premier milieu de sorption (203a-c) étant agencés à l'opposé des orifices d'alimentation (209b-d) des canaux (208b-d) d'un milieu de sorption suivant (203b-d) de manière à alimenter un liquide évacué du premier milieu de sorption (203a-c) vers le milieu de sorption suivant (203b-d).

8. Élément de sorption selon la revendication 7 et l'une quelconque des revendications 2 à 6, dans lequel le milieu de sorption suivant (203b-d) est agencé à l'intérieur du premier milieu de sorption (203a-c), la face extérieure du milieu de sorption suivant (203b-d) étant située à l'opposé de la face intérieure du premier milieu de sorption (203a-c).

9. Utilisation d'un élément de sorption selon l'une quelconque des revendications 1 à 8 pour éliminer des contaminants hydrocarbures à partir d'un liquide aqueux.

10. Milieu de sorption (301) pour éliminer des contaminants hydrocarbures à partir d'un liquide aqueux, le milieu de sorption comprenant des feuillets (302, 303, 304, 305) d'un matériau de feuillet sorbant, les feuillets (302, 303, 304, 305) étant agencés par juxtaposition les uns par rapport aux autres de manière à former un empilement de couches, les bords opposés des feuillets empilés définissant une première face d'extrémité de l'empilement et une seconde face d'extrémité de l'empilement opposée à la première face d'extrémité, dans lequel les couches adjacentes sont reliées ensemble par une pluralité de raccords linéaires et/ou de raccords ponctiformes espacés entre eux, fournissant ainsi une pluralité de canaux (308), chaque canal étant défini par le matériau de feuillet sorbant et s'étendant à partir d'un orifice d'alimentation au niveau de la première face d'extrémité vers un orifice d'évacuation au niveau de la seconde face d'extrémité.

11. Milieu de sorption selon la revendication 10, dans lequel les raccords sont agencés le long de lignes de liaison (306, 307) s'étendant à partir de la première face d'extrémité vers la seconde face d'extrémité, dans lequel les lignes de liaison (306, 307) entre des paires suivantes de feuillets (303/304), (304/305) sont déplacées dans une direction transversale aux lignes de liaison (306, 307).

12. Milieu de sorption selon la revendication 11, dans lequel les lignes de liaison (306, 307) sont agencées avec un espacement sensiblement constant.

13. Milieu de sorption selon la revendication 12, dans lequel les lignes de liaison (306, 307) entre des paires suivantes de feuillets (303/304, 304/305) sont déplacées de manière transversale les unes par rapport aux autres essentiellement de la moitié de l'espacement.

14. Procédé de production d'un milieu de sorption pour la séparation de contaminants hydrocarbures à partir d'un liquide aqueux, le procédé comprenant les étapes consistant à :
enrouler une pluralité d'enroulements d'une première bande (402) d'un matériau de feuillet sorbant souple ensemble avec au moins une deuxième bande (404) d'un matériau de feuillet sorbant souple sur un élément de bobine (405), formant ainsi un rouleau (425) de matériau de feuillet sorbant souple,
tout en enroulant les première et deuxième bandes (402, 404), relier les faces adjacentes (406/408, 407/411) des bandes (402, 404) ensemble par une pluralité de raccords linéaires et/ou ponctiformes espacés entre eux, les raccords étant agencés le long de lignes de liaison (421, 423), les lignes de liaison (421, 423) entre des paires suivantes de couches étant déplacées les unes par rapport aux autres dans une direction transversale aux lignes de liaison (421, 423),
ouvrir en le coupant le rouleau le long d'un plan radial parallèle à l'axe d'enroulement (424) du rouleau (425), et
aplatir le matériau enroulé de manière à former un empilement de feuillets de matériau de feuillet sorbant en juxtaposition les uns par rapport aux autres, les bords opposés des feuillets définissant une première face d'extrémité et une seconde face d'extrémité opposée à la première face d'extrémité, dans lequel les feuillets suivants sont reliés ensemble par les raccords de manière à fournir des canaux, chacun des canaux s'étendant à partir d'un orifice d'alimentation au niveau de la première face d'extrémité vers un orifice d'évacuation au niveau de la seconde face d'extrémité.

15. Procédé selon la revendication 14, le procédé comprenant les étapes ultérieures consistant à :
subdiviser l'empilement en sous-empilements en découpant l'empilement sensiblement perpendiculairement et/ou sensiblement parallèlement aux canaux ;
empiler et relier ensemble une pluralité de sous-empilements les uns au-dessus des autres avec les canaux des sous-empilements agencés de manière sensiblement parallèle les uns aux autres, formant ainsi un bloc avec des canaux s'étendant à partir d'une première face d'extrémité du bloc vers une seconde face d'extrémité du bloc.

16. Procédé selon l'une quelconque des revendications 12 à 13, dans lequel le matériau de feuillet sorbant est un matériau oléophile et/ou hydrophobe.
